# EUROPÄISCHE PATENTANMELDUNG

(11) **EP 0 749 253 A1**
(43) Veröffentlichungstag der Anmeldung: **18.12.1996**
(21) Anmeldenummer: 95109283.2
(22) Anmeldetag: 15.06.1995
(51) Int. Cl.: H04Q 7/18, H04M 15/28

(54) **Empfangsgerät für Digitalsignale mit Gebührenzähler**

(71) Anmelder: FIRMA ERIKA KÖCHLER, CH-8833 Samstagern (CH)
(72) Erfinder: Köchler, Helmut, CH-8832 Wollerau (CH); von Burg, Christoph, CH-8805 Richterswil (CH); Landert, Christian, CH-6340 Baar (CH)
(74) Vertreter: Blum, Rudolf Emil Ernst

(57) **Zusammenfassung**

Das Empfangsgerät kann z.B. als Pager ausgebildet sein, mit dem gebührenpflichtige Informationen per Funk empfangen werden. In einer Empfangssteuerung (2) werden jene Informationen herausgefiltert, die ausgewertet und dargestellt werden sollen. Die auszuwertenden Informationen werden über eine Eingabeeinheit (5) ausgewählt. Zur Ermittlung der Gebühren der ausgewählten Informationen ist im Empfangsgerät ein Gebührenzähler (6) angeordnet. Erreichen diese Gebühren eine bestimmte Limite, so wird die Auswahl weiterer Informationen gesperrt. Wird die Limite überschritten, so wird die Auswertung gebührenpflichtiger Informationen gestoppt. Auf diese Weise kann der Benutzer im Rahmen seiner Kreditlimite selbst wählen, welche Informationen bzw. Dienste er empfangen will, ohne dass er mit dem Dienstanbieter bzw. Netzwerkbetreiber Kontakt aufnehmen muss. Die Kreditlimite kann je nach Anforderungen verändert werden.

## Beschreibung

Die Erfindung betrifft ein Empfangsgerät für per Funk ausgestrahlte Digitalsignale sowie ein Verfahren zum Betrieb eines solchen Geräts gemäss dem Oberbegriff der unabhängigen Ansprüche.

Geräte dieser Art sind vor allem in Form von Pagern bekannt, können aber auch z.B. ein integraler Bestandteil von Mobiltelefonen sein. Normalerweise sind sie Teil eines Funkrufnetzes, wie es z.B. in EP-A-198 448 beschrieben ist, und dienen zum Empfang von Meldungen oder Informationen verschiedenster Art. Hierzu besitzen sie in der Regel mehrere Anrufadressen, die den Empfang von Daten verschiedener Anbieter oder Dienste ermöglichen. So kann ein Pager z.B. auf einer Adresse Finanzinformationen empfangen und auf einer anderen Adresse den Strassenzustand oder auch individuelle, nur für ihn bestimmte Meldungen. In der Praxis besitzen Pager heute bis zu 16 verschiedene Adressen oder auch mehr und können somit entsprechend verschiedene Dienstmeldungen empfangen und auswerten. Wenn ein Pagerbesitzer einen neuen Dienst empfangen will, muss im Pager die Rufnummer (Adresse) des Dienstes einprogrammiert werden. Dies kann direkt am Pager oder per Funk von der Zentrale durchgeführt werden. Ist der Dienst nicht gebührenfrei, so müssen die zusätzlichen Kosten im Abonnement des Benutzers beim Lieferanten der Information oder dessen Stellvertreter verrechnet werden. Dies führt jedoch zu einem beträchtlichen administrativen und technischen Aufwand und hat für den Pagerbesitzer den Nachteil, dass er mit dem Operator oder dem Dienstanbieter in Kontakt treten muss, um einen neuen Dienst auf seinen Pager aufzuschalten.

Es stellt sich deshalb die Aufgabe, ein Verfahren bzw. ein Empfangsgerät der eingangs genannten Art bereitzustellen, das diesen Nachteil nicht aufweist. Diese Aufgabe wird durch die unabhängigen Ansprüche gelöst.

Wie konventionelle Geräte weist also das erfindungsgemässe Empfangsgerät eine Empfangssteuereinheit auf, mit welcher die auszuwertenden und somit dem Benutzer zur Verfügung stehenden Digitalsignale z.B. aufgrund ihrer Adresse erkannt werden. Zusätzlich hierzu weist das Gerät einen Gebührenzähler auf, mit dem die Gebühren der ausgewerteten Digitalsignale ermittelt werden. Der Gebührenzähler ist operativ mit der Empfangssteuereinheit verbunden und kann diese steuern. So kann z.B. die Auswahl oder Anzahl auszuwertender Signale durch den Gebührenzähler limitiert werden.

Der Gebührenzähler kann einen Speicher aufweisen, in welchem eine Gebührenlimite bzw. ein Kredit gespeichert ist, und die bzw. der mit den angefallenen Gebühren verglichen wird. Der Speicher kann mittels geeigneter Massnahmen direkt am Gerät oder vorzugsweise auch per Funk durch autorisierte Personen geändert werden.

Sind die Signale in Gruppen unterteilt, wobei z.B. jede Gruppe die Signale eines bestimmten Diensts um-fasst, so kann mit dem Gebührenzähler z.B. die Anzahl gleichzeitig zur Auswertung ausgewählter Gruppen bzw. Dienste beschränkt werden. Hierbei können Gruppen teuerer Dienste auch mehrfach gezählt, Gruppen von Gratisdiensten nicht gezählt und Gruppen von Werbediensten negativ gezählt (d. h. als Bonus gutgeschrieben) werden. Es ist auch möglich, für eine oder mehrere Gruppen mit einem Zeitgeber die Zeit zu ermitteln, während der diese Gruppe zur Auswertung ausgewählt ist bzw. sind. Diese Zeit kann zur Ermittlung der angefallenen Gebühr gegebenenfalls mit einer Zeitgebühr multipliziert werden.

Die Erfindung eignet sich insbesondere für Pager, aber auch für andere Geräte, wie z.B. Mobiltelefone, Mobile Data etc.

Weitere Vorteile und Anwendungen der Erfindung ergeben sich aus der nun folgenden Beschreibung anhand der Figuren. Dabei zeigen:
Figur 1 ein Blockdiagramm eines erfindungsgemässen Empfangsgeräts und
Figur 2 den Verfahrensablauf bei der Ermittlung der auswählbaren bzw. auszuwertenden Dienste.

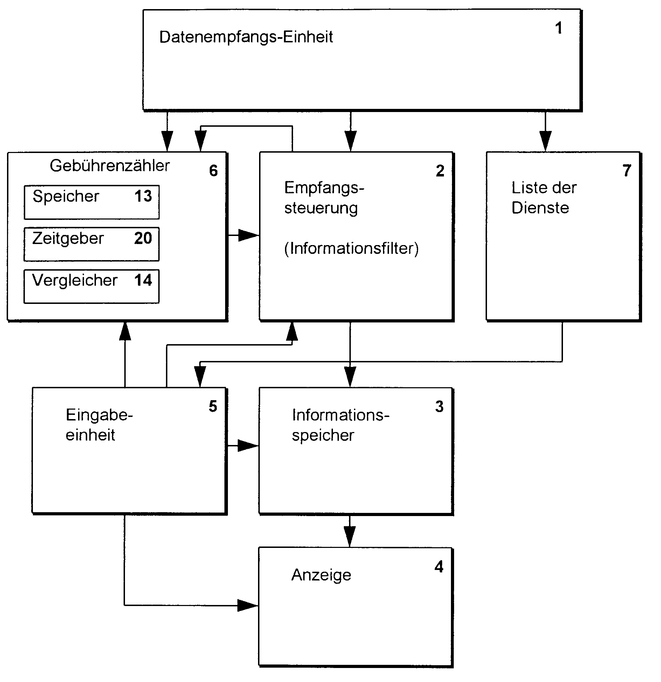

In Figur 1 wird das Blockdiagramm einer möglichen Ausführung des Empfangsgeräts im Form eines Pagers gezeigt. Dieser Pager empfängt Daten eines Funkrufnetzes konventioneller Art, wie es z.B. in EP-A-198 448 beschrieben ist. Er umfasst eine Datenempfangs-Einheit 1 bekannter Art, die die Funksignale eines Netzbetreibers empfängt und demoduliert. Die so empfangenen digitalen Daten werden einer Empfangssteuerung 2 zugeleitet, die als Informationsfilter dient. Sie wählt die Daten aus, die gespeichert werden sollen. Dies geschieht zum Beispiel aufgrund von Adressignalen, die jedes Datenpaket begleiten. Dabei weisen alle Datenpakete, die zum gleichen Dienst gehören, dieselbe Adresse auf.

Die auszuwertenden Daten werden dekodiert und in einem Informationsspeicher 3 abgelegt. Über eine Eingabeeinheit 5 kann der Benutzer bestimmen, welche der im Informationsspeicher 3 gespeicherten Daten in einer Anzeige 4 dargestellt werden sollen. Bei der Anzeige 4 kann es sich z.B. um eine numerische, alphanumerische oder graphische Flüssigkristallanzeige handeln.

Das Empfangsgerät umfasst ferner einen Gebührenzähler 6. Dieser Gebührenzähler überwacht, welche Dienste bzw. Gruppen von Daten zur Auswertung ausgewählt sind und ermittelt einen entsprechenden Gebührenbetrag. Überschreitet dieser Betrag einen bestimmten Wert, so wird die Auswahl weiterer Dienste verhindert oder die weitere Auswertung bereits ausgewählter Dienste blokkiert. Dies wird weiter unten näher beschrieben.

In einem Dienst- bzw. Gruppenspeicher 7 des Empfangsgeräts ist eine Liste der Dienste abgespeichert, die empfangen werden können. Diese Liste umfasst den Namen jedes Dienstes, Angaben zu den Gebühren für dessen Empfang sowie die Adresse, die den Datenpaketen dieses Dienstes zugeordnet ist. Die Liste kann regelmässig per Funk auf den neuesten Stand gebracht werden. Mit Befehlen, die über die Eingabeeinheit 5 eingegeben werden, werden die Namen der Dienste und die Gebühreninformationen auf die Anzeige 4 übertragen. Nun können die gewünschten Dienste ausgewählt und der Empfangssteuerung 2 mitgeteilt werden.

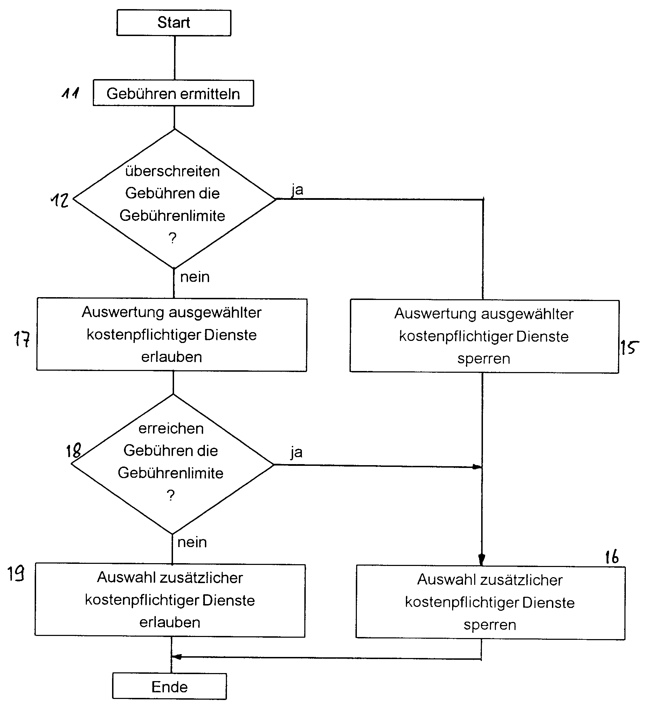

Die Aufgabe des Gebührenzählers 6 liegt wie erwähnt darin, die Gebühren für die vom Benutzer verwendeten Dienste als Gebührenstand zu ermitteln und je nach Resultat dieser Ermittlung festzulegen, ob der Benutzer noch weitere kostenpflichtige Dienste auswählen darf oder ob aufgrund einer Kostenüberschreitung die Auswertung bereits ausgewählter kostenpflichtiger Dienste gesperrt werden muss. Ein möglicher Verfahrensablauf wird in Figur 2 dargestellt.

In einem ersten Schritt 11 werden die Gebühren ermittelt, die aufgrund der jetzigen Einstellung des Empfangsgeräts und gegebenenfalls aufgrund dessen früherer Verwendung anfallen bzw. anfielen. Diese Gebühren werden mit einer Gebührenlimite verglichen. Hierzu ist der Gebührenzähler mit einem Speicher 13 ausgerüstet, der die Gebührenlimite bzw. den noch nicht aufgebrauchten Kredit enthält, sowie mit einem Vergleicher 14, der in Hard- oder Software ausgeführt sein kann.

Zeigt der Vergleich in Schritt 12, dass die Gebührenlimite überschritten bzw. der Kredit überzogen worden ist, so muss in Schritt 15 die Auswertung einiger oder aller der ausgewählten gebührenpflichtigen Dienste und in Schritt 16 die Auswahl zusätzlicher gebührenpflichtiger Dienste gesperrt werden.

Ist die Gebührenlimite nicht überschritten bzw. der Kredit nicht überzogen, so kann in Schritt 17 die Auswertung der zur Zeit ausgewählten Dienste erlaubt werden. Sodann wird in Schritt 18 geprüft, ob die Gebührenlimite gerade erreicht bzw. der Kredit aufgebraucht ist. In diesem Fall muss in Schritt 16 die Auswahl weiterer gebührenpflichtiger Dienste gesperrt werden.

Ist die Gebührenlimite nicht erreicht bzw. der Kredit nicht aufgebraucht, so kann in Schritt 19 auch die Auswahl weiterer gebührenpflichtiger Dienste erlaubt werden.

Zur Ermittlung der Gebühren in Schritt 11 stehen verschiedene Möglichkeiten offen:

In einem einfachsten Verfahren, wird lediglich die Zahl der momentan zur Auswertung ausgewählten, gebührenpflichtigen Dienste ermittelt. Diese Zahl entspricht dann der angefallenen Gebühr, und zwar unabhängig von der Zeitdauer, während welcher die einzelnen Dienste ausgewählt sind. Diese Methode kann verbessert werden, indem besonders teure Dienste mehrfach gezählt werden. Andere Dienste (z.B. Werbedienste) können auch negativ gezählt werden, was zu einer Erhöhung der Gebührenlimite führt.

In einem anderen Verfahren zur Gebührenermittlung wird das Produkt aus Summe und Zeit der konsumierten Dienste ermittelt. Auch hier können teurere Dienste mehrfach gezählt bzw. gewisse Dienste nicht oder negativ gezählt werden. Zur Ermittlung der Zeit ist der Gebührenzähler mit einem Zeitgeber 20 ausgerüstet. In einer praktischen Ausführung dieses Verfahrens kann in regelmässigen Zeitintervallen (z.B. von einigen Sekunden oder Minuten) die Zahl der momentan ausgewählten Dienste ermittelt und zu einem Zähler hinzu addiert oder von einem Kredit subtrahiert werden. Erreicht der Zähler die Gebührenlimite bzw. geht der Kredit auf null, so wird die Auswertung und/oder Auswahl gebührenpflichtiger Dienste gesperrt. In regelmässigen Zeitabständen von z.B. einer Woche oder einem Monat wird der Kredit z.B. durch Bezahlung der vereinbarten Benutzungsgebühr automatisch wieder auf die Kreditlimite aufgefüllt bzw. der Gebührenzähler auf null gesetzt.

Da die Kosten der empfangenen Dienste lokal auf dem Pager erfasst und überwacht werden, kann der Benutzer jederzeit von sich aus entscheiden, welche Informationen er empfangen will. Will er einen neuen Dienst aufschalten, so braucht er nicht mit dem Dienst- bzw. Netzwerkanbieter in Kontakt zu treten, solange seine Gebührenlimite bzw. sein Kredit zum Empfang dieses Dienstes ausreicht. Reicht sein Kredit nicht aus, so kann er weniger interessante Dienste abschalten. Möchte er nicht auf Dienste verzichten, so kann er mit dem Betreiber ein höheres Limit vereinbaren. In diesem Falle wird die Gebührenlimite bzw. der Kredit erhöht. Dies kann lokal am Pager z.B. über Eingabe eines bestimmten Codes oder per Funk geschehen, wobei in letzerem Fall der Wert des Speichers 13 z.B. durch eine Funkmeldung an eine vorbestimmte Geräteadresse des Empfangsgeräts geändert wird. Der Kredit bzw. die Gebührenlimite kann auch wieder verringert werden.

Der Gebührenzähler kann auch über weitere Funktionen verfügen. So kann er Dienste erkennen, bei denen die Benutzung während einer anfänglichen Probephase gratis ist. Er kann auch Gutschriften für gelesene Werbung eintragen d.h. dem Kredit bzw. der Gebührenlimite gutschreiben.

Die Erfindung eignet sich insbesondere für Pager, d. h. tragbare Funkrufempfänger für digitale Meldungen, kann aber auch an anderen Orten eingesetzt werden, wo gebührenpflichtige digitale Daten per Funk empfangen werden, wie z.B. in Mobiltelefonen mit Pagerfunktionen, in Mobile Data Systemen, usw.

## Patentansprüche

1. Empfangsgerät für per Funk ausgestrahlte Digitalsignale mit einer Empfangssteuereinheit (2) zur Ermittlung auszuwertender Digitalsignale, gekennzeichnet durch mindestens einen Gebührenzähler (6) zum Ermitteln von Gebühren der auszuwertenden Digitalsignale, wobei die Empfangssteuereinheit (2) durch den Gebührenzähler (6) steuerbar ist.

2. Empfangsgerät nach Anspruch 1, dadurch gekennzeichnet, dass die Auswahl auszuwertender Digitalsignale durch den Gebührenzähler (6) beschränkbar ist.

3. Empfangsgerät nach einem der vorangehenden Ansprüche, dadurch gekennzeichnet, dass der Gebührenzähler (6) mindestens einen Speicher (13) für eine Gebührenlimite bzw. einen Kredit und Vergleichsmittel (14) zum Vergleich des Inhalts des Speichers (13) mit den Gebühren für ausgewertete Digitalsignale.

4. Empfangsgerät nach Anspruch 3, dadurch gekennzeichnet, dass der Inhalt des Speichers (13) per Funk änderbar ist.

5. Empfangsgerät nach einem der vorangehenden Ansprüche, dadurch gekennzeichnet, dass die Digitalsignale in Gruppen eingeteilt sind, wobei mit der Empfangssteuereinheit (2) die Digitalsignale einer oder mehrerer Gruppen zur Auswertung auswählbar sind, und dass mit dem Gebührenzähler (6) die Zahl gleichzeitig auswählbarer Gruppen beschränkbar ist.

6. Empfangsgerät nach einem der vorangehenden Ansprüche, dadurch gekennzeichnet, dass die Digitalsignale in Gruppen eingeteilt sind, wobei mit der Empfangssteuereinheit (2) die Digitalsignale einer oder mehrerer Gruppen zur Auswertung auswählbar sind, und dass der Gebührenzähler (6) einen Zeitgeber (20) aufweist, wobei mit dem Zeitgeber (20 für mindestens eine der Gruppen die Zeit ermittelbar ist, während der diese mindestens eine der Gruppen ausgewählt ist.

7. Empfangsgerät nach einem der vorangehenden Ansprüche, dadurch gekennzeichnet, dass die Digitalsignale in Gruppen eingeteilt sind, wobei jeder Gruppe eine Gruppengebühr zugeordnet ist, und dass das Empfangsgerät einen Gruppenspeicher (7) mit einer Liste der Gruppen und der Gruppengebühren aufweist.

8. Empfangsgerät nach einem der vorangehenden Ansprüche, dadurch gekennzeichnet, dass es ein Pager ist.

9. Verfahren zum Empfang von per Funk ausgestrahlter Digitalsignale mit einem Empfangsgerät, in welchem ein Teil der Digitalsignale ausgewertet wird, dadurch gekennzeichnet, dass das Empfangsgerät einen Gebührenzähler aufweist, wobei mit dem Gebührenzähler festgestellt wird, welche Digitalsignale ausgewertet werden, die Gebühren für die ausgewerteten Digitalsignale als Gebührenstand errechnet werden, und aufgrund des Gebührenstandes die Auswahl auswertbarer Digitalsignale limitiert wird.

10. Verfahren nach Anspruch 9, dadurch gekennzeichnet, dass der Gebührenstand mit einer per Funk änderbaren Gebührenlimite verglichen wird.
